# EUROPEAN PATENT APPLICATION

(11) **EP 4 699 914 A1**
(43) Date of publication of application: **25.02.2026**
(21) Application number: 25197291.5
(22) Date of filing: 21.08.2025
(51) Int. Cl.: B62H 5/00, B62J 43/13, B62J 43/23, B62M 6/90

(54) **BATTERY MOUNT FOR AN ELECTRIC BIKE**

(30) Priority: 23.08.2024 NL 2038489
(71) Applicant: Koninklijke Gazelle N.V., 6951 BP Dieren (NL)
(72) Inventor: VAN NULAND, Willem Toon, 6951 BP Dieren (NL); KNITTEL, Sören, 6951 BP Dieren (NL); HOFS, Richard, 6951 BP Dieren (NL)
(74) Representative: De Vries & Metman

(57) **Abstract**

Battery mount (3) for an electric bike (1). The battery mount (3) comprises a lock (11) movable between a locking position and a release position. The battery mount further comprises a stop (15), such as a push button, movable between a blocking position limiting movement of the battery placed on the mount with the lock in the release position, and an unblocking position allowing removal of the unlocked battery.

## Description

The invention relates to a battery mount for an electric bike, and to an electric bike comprising such a system.

Electric bikes use rechargeable batteries to power the electric motor. The batteries are usually mounted by means of a battery mount attached to the frame of the bike or in a housing, e.g., integrally in one of the frame tubes. A lock is used to lock the battery and prevent unauthorized or accidental removal.

An example of an electric bike with a lockable battery mount is disclosed in US 9,130,211. The disclosed system includes an auxiliary lever for pushing the battery in a removal direction after it is unlocked.

In practice, the lock may not lock very well if the battery is not accurately put in place, so the battery can be released unintentionally, for instance during use. Also, the battery can fall from the bike after unlocking.

It is an object of the present invention to provide a battery mount that allows a more controllable way of locking and unlocking the battery.

The object of the invention is achieved with a battery mount for an electric bike comprising a lock that is movable between a locking position to lock a matching battery, and a release position to unlock the battery. The battery mount further comprises a stop, that is movable between a blocking position limiting movement of a battery placed on the mount with the lock in the release position, and an unblocking position, allowing removal of the battery. With these measures, it is prevented that the battery can fall from the battery mount directly after unlocking or after inadequate locking. The stop can for example limit movement of the battery to a tilting movement within the battery mount, so removal of the battery from the battery mount is blocked.

In a particular embodiment, the stop is a push button. The push button can for example comprise a biasing element, such as one or more pressure springs, biasing the push button towards the blocking position.

The battery mount typically comprises a top section for engaging a top end of the battery, and a lower section for engaging a bottom part of the battery. In a particular embodiment, the top section comprises the movable stop. The top section and the lower section can both be provided with fastening means allowing mounting of the top section and lower section to the frame of the electric bike. The lower end is typically provided with electric contacts engaging contacts of the battery to allow power transfer to the electric drive of the electric bike.

The invention also relates to an assembly of a battery and a battery mount, the battery mount comprising:
- a lock that is movable between a locking position to lock the battery, and a release position to unlock the battery and
- a stop, such as a push button, that is movable between a blocking position limiting movement of the battery placed on the mount with the lock in the release position, and an unblocking position, allowing removal of the battery.

The battery can for example comprise a top end engaging the stop when the stop is in the blocking position. More particularly, the top end of the battery may for example comprise a grip with a grip opening, the stop projecting through the grip opening when the stop is in the blocking position.

In a further aspect, the invention relates to an assembly of a battery and a battery mount for an electric bike, the battery comprising a lock with a latch that is movable between a locking position to lock a matching battery, and a release position to unlock the battery, the assembly having a gap - e.g., between the battery and the battery mount - allowing access to the latch, and a tool stop in the gap. The tool stop can for example be hook-shaped having a concave side that faces away from the latch. This proves to be an adequate anti-theft measure, helping to prevent that a tool can be used to enter the gap in order to move the latch into the unlocking position without using the appropriate key.

The invention also relates to an electric bike comprising such an assembly or comprising at least the battery mount.

In this respect, the words "electric bike" includes any vehicle with a wheeled tubular frame and an electric drive either as a main drive or as an auxiliary drive for pedal assistance, such as e-bikes, cargo bikes with electric pedal assistance, electric motorcycles or scooters.

The invention is further explained with reference to the accompanying drawings showing exemplary embodiments.
Figure 1: shows an exemplary embodiment of an electric bike with a battery mount;
Figure 2: shows an assembly of a battery and a battery mount of the electric bike of Figure 1;
Figure 3: shows the assembly of Figure 2 in exploded view;
Figure 4: shows the top end of the battery mount in exploded view;
Figure 5: shows the top end of the assembly of the battery and the battery mount in a longitudinal cross section through the lock;
Figure 6: shows the top end of the assembly of a locked battery and the battery mount in a central longitudinal cross section;
Figure 7: shows the cross section of Figure 6 when the lock is unlocked and the stop is in the blocking position;
Figure 8: shows the cross section of Figure 6 with the stop in the unblocking position;
Figure 9: shows the cross section of Figure 6 with the battery being released.

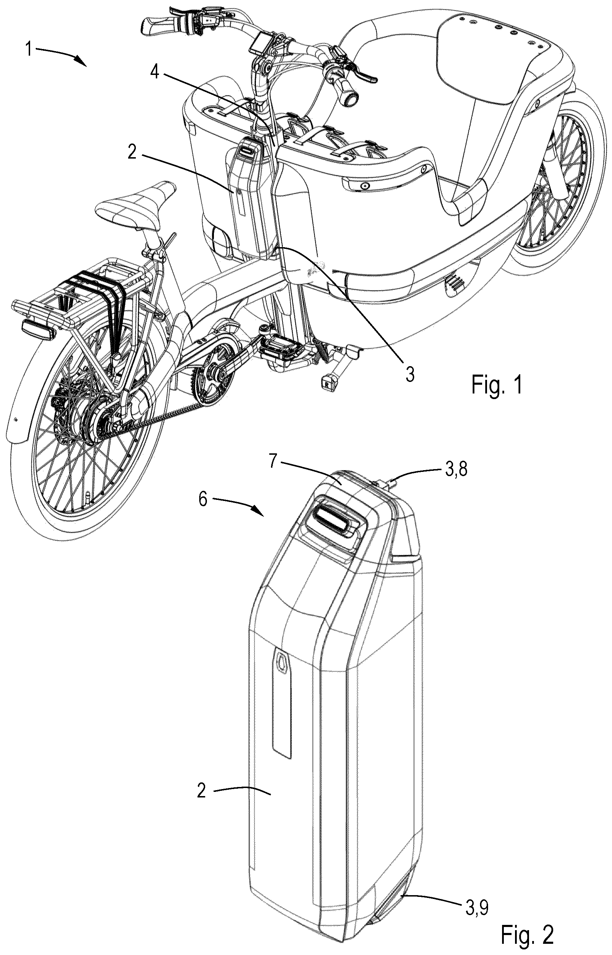

Figure 1 shows an electric bike 1 with a battery and 2 a battery mount 3 on the headtube 4 of the electric bike 1. In an alternative embodiment, the battery mount can be mounted in other positions, e.g., on the seat tube or on the downtube. In the shown embodiment, the electric bike 1 is a cargo bike but the battery mount 3 of the present invention can also be used with other types of electric bicycles with any suitable number of wheels.

The assembly of the battery 2 and the battery mount 3 is shown in more detail in Figure 2. In the shown exemplary embodiment, the battery 2 has the shape of a rectangular block with a top end having a backwardly inclined front surface **5.** The top end of the battery 2 is provided with an opening 6 to form a grip 7 allowing a user to handle and carry the battery 2.

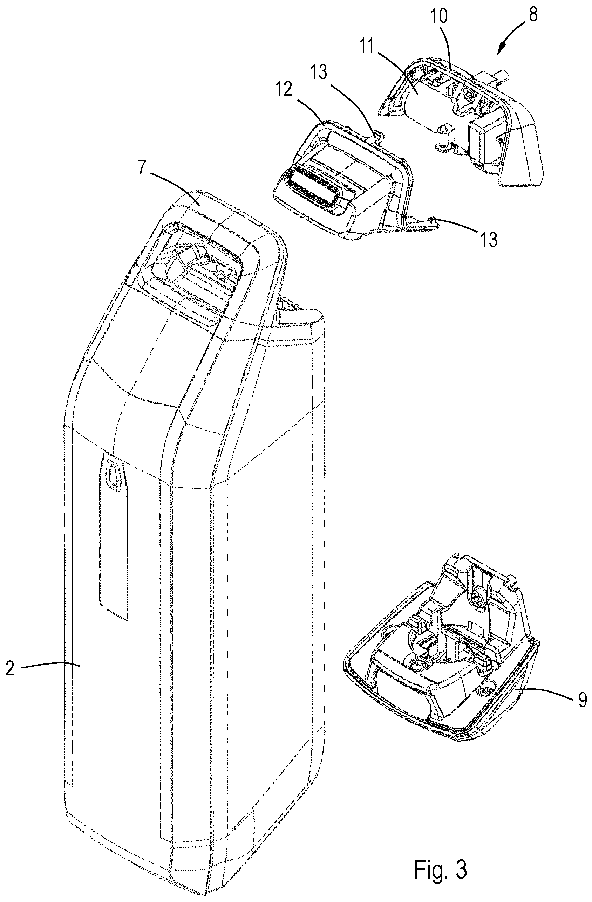

The assembly of the battery 2 and the battery mount 3 is shown in exploded view in Figure 3 and comprises a top section 8 engaging the grip 7 of the battery 2, and a lower section 9 providing electro-conductive terminal contacts engaging power transfer contacts of the battery 2 to transfer power from the battery 2 to an electric drive of the electric bike 1. The lower part 9 of the battery mount 3 connects to the lower end of the battery 2, forming a stable, non-rattling and flush connection.

The top section 8 of the battery mount 3 comprises a lock part 10 encasing a cylinder lock 11, and a push button part 12. The lock part 10 is mounted on the head tube 4 of the electric bike 1. Alternatively, the lock part can be mounted on any other suitable part of the frame. The push button part 12 is snap fitted to the lock part 10 by means of snap fit latches 13.

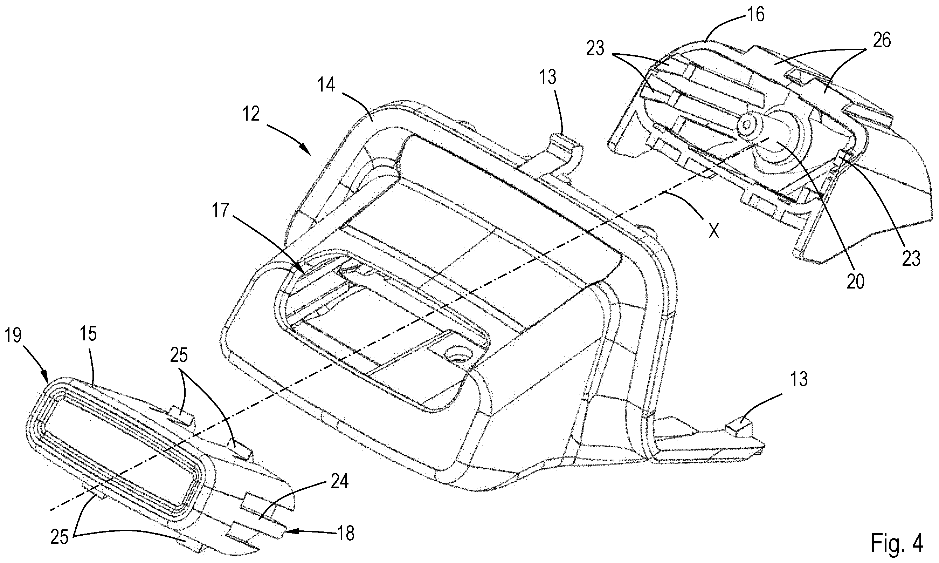

The push button part 12 is shown in exploded view in Figure 4 and is built of three separate parts: a housing 14, a stop 15 formed by a push button and a push button seat 16.

The housing 14 is open at its rear side where it connects to the lock part 10 by means of the snap fit latches 13. At the front side it has a push button opening 17.

The push button seat 16 is received in the housing 14. The push button seat 16 has an inner cavity receiving a lower end 18 of the push button 15. The push button seat 16 has an upper end 19 projecting outwardly via the front opening 17 of the housing 14.

Within its inner cavity the push button seat 16 has a central cylindrical projection 20. The cylindrical projection 20 is upwardly inclined relative to a central longitudinal axis X of the push button part 12 and is parallel to the wall of the push button seat 16 around the inner cavity.

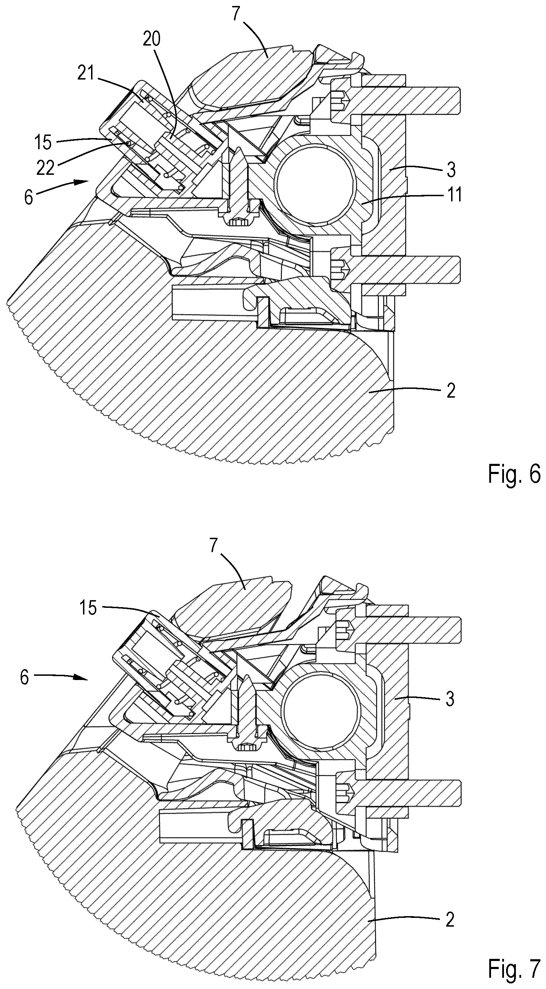

The push button 15 has an inner cavity which is open at the lower side 18 of the push button 15. As shown in Figure 6, the push button 15 also has a central cylindrical projection 21, telescopically receiving the cylindrical projection 20 of the push button seat 16 to form a sliding guide, as is shown in Figures 6-9. In the assembled state, a pressure spring 22 is placed around the two telescopically arranged cylindrical projections 20, 21.

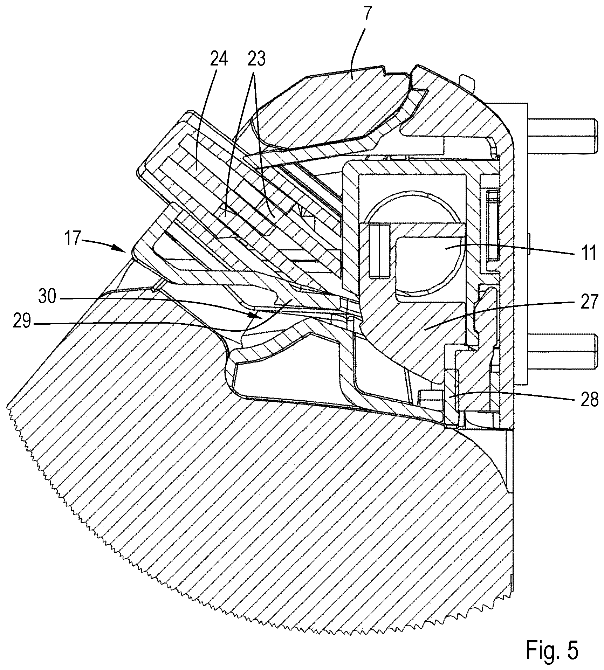

As shown in Figures 4 and 5, the inner wall of the push button seat 16 is provided with two pairs of ridges 23 at opposite sides of the central cylindrical projection 20, both pairs of ridges 23 slidingly receiving a ledge 24 on the outer wall of the push button 15 so as to guide an up and down sliding movement of the push button 15 relative to the push button seat 16. Figure 5 shows a longitudinal cross section parallel to the central axis X in Figure 4, but at a distance from that axis X, through the ridges 23 and the ledge 24.

To prevent the push button 15 from falling out of the opening 17 in the housing 14, the lower end 18 of the push button 15 is provided with stops 25 that move in corresponding recesses 26 in the wall of the push button seat 16.

Figures 6 - 9 show consecutive steps of releasing the battery 2 from the battery mount 3 in a central longitudinal cross section through the axis X. In Figure 6 shows the battery locked in the battery mount 3. The push button 15 projects through the opening 6 of the grip 7 of the battery 2.

In Figure 7, the battery 2 is unlocked and can be moved until it hits the push button 15. In this position, the battery 2 cannot fall from the battery mount 3, but can merely tilt over a limited angle, e.g., at most 10 degrees.

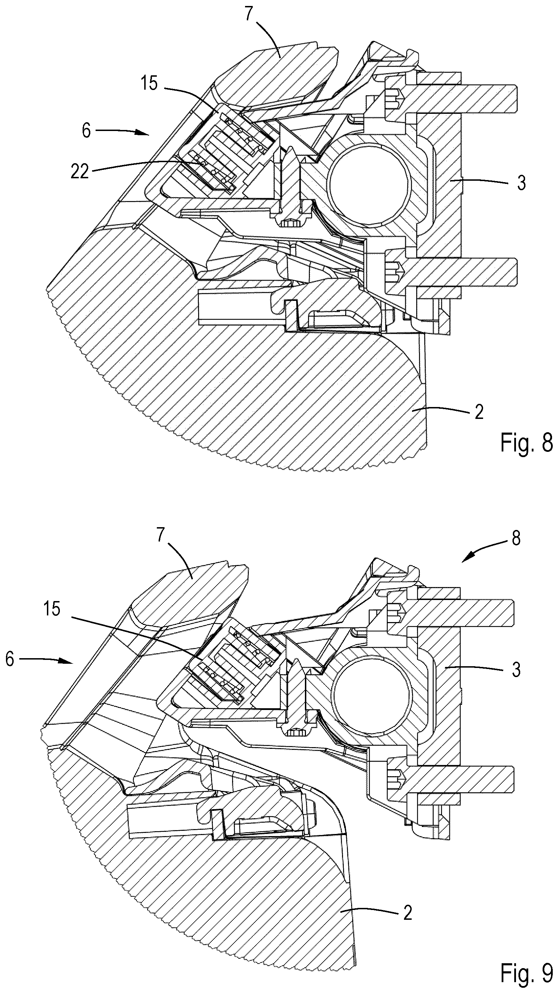

To fully release the battery 2, the push button 15 can be pushed down against the action of the pressure spring 22 (Figures 8 and 9). After releasing the pushing force, the pressure spring 22 pushes the push button 15 back up again (Figure 6).

To place the battery 2, the lower front edge of the battery 2 is placed on the lower part 9 of the battery mount 3. The battery 2 is then tilted towards the head tube 4. The push button 15 is pushed in to allow the grip 7 of the battery 2 to slide over the push button 15 to a position where the battery 2 rests in the battery mount 3. Once the battery 2 is put in place, the push button 15 is pushed back upward by the pressure spring 22, and the battery 2 can be locked by turning the key of the cylinder lock 11. In the shown embodiment, the push button 15 is flush with surrounding surfaces of the battery 2 in that position.

The cylinder lock 11 is shown in more detail in Figure 5. Turning an appropriate key of the cylinder lock 11 slides down a latch 27 to lock a catch 28 on top of the battery, so as to lock the battery 2. Turning the key the other way around will lift the latch and release the catch 28 and thus release the battery 2. Other types of locking mechanisms can also be used.

To prevent that some tool can be moved in a gap 30 between the battery top end at the grip opening 17 and the push button seat 16 and pried in order to move the latch 27 without using the key, the lower side of the push button seat 16 is provided with a hook shaped tool stop 29.

## Claims

1. Battery mount (3) for an electric bike (1), the battery mount (3) comprising a lock (11) movable between a locking position and a release position;
wherein the battery mount further comprises a stop (15), movable between a blocking position and an unblocking position.

2. Battery mount according to claim 1, wherein the stop (15) is a push button.

3. Battery mount according to claim 2, the push button (15) comprising a biasing element (22), such as one or more pressure springs, biasing the push button towards the blocking position.

4. Battery mount according to any one of the preceding claims, wherein the battery mount comprises a top section (8) and a lower section (9), wherein the top section comprises the stop (15).

5. Assembly of a battery (2) and a battery mount (3) for an electric bike (1), the battery mount comprising:
- a lock (11) that is movable between a locking position to lock the battery, and a release position to unlock the battery and
- a stop (15), such as a push button, that is movable between a blocking position limiting movement of the battery placed on the mount with the lock in the release position, and an unblocking position, allowing removal of the battery.

6. Assembly according to claim 5, wherein the battery (2) comprises a top end provided with a grip (7), the stop (15) being configured to project through an opening (6) of the grip when the stop (15) is in the blocking position, and to allow passage of the grip opening (6) of the battery when the stop is in the unblocking position.

7. Assembly according to claim 5 or 6, wherein the lock (11) comprises a latch (27) and wherein the assembly includes a gap (30) - e.g., between the battery and the battery mount - allowing access to the latch, and a tool stop (29) in the gap.

8. Electric bike (1) comprising an assembly according to any one of the preceding claims 5 to 8, e.g., comprising a tubular frame, the assembly being mounted on one of the tubes of the frame, such as the head tube (4).
